# EUROPEAN PATENT APPLICATION

(11) **EP 4 024 027 A1**
(43) Date of publication of application: **06.07.2022**
(21) Application number: 20885877.9
(22) Date of filing: 11.09.2020
(51) Int. Cl.: G01N 15/14, G01N 37/00

(54) **SAMPLING CONTROL DEVICE, PARTICLE SAMPLING DEVICE AND PARTICLE SAMPLING SYSTEM IN WHICH SAMPLING CONTROL DEVICE IS USED, METHOD FOR CONTROLLING SAMPLING, AND CONTROL PROGRAM**

(30) Priority: 07.11.2019 JP 2019202720
(71) Applicant: Sony Group Corporation, Tokyo 108-0075 (JP)
(72) Inventor: TAKAHASHI, Kazuya, Tokyo 108-0075 (JP); SAKAMOTO, Naohisa, Tokyo 108-0075 (JP); KAI, Shinichi, Tokyo 108-0075 (JP); KATSUMOTO, Yoichi, Tokyo 108-0075 (JP)
(74) Representative: D Young & Co LLP
(86) International application number: PCT/JP2020/034384
(87) International publication number: WO 2021/090573

(57) **Abstract**

To provide a technique for controlling a timing for sorting, in order to improve sorting performance of particles in a technique for sorting target fine particles in a passage.

Provided is a sorting control device including a sorting control unit configured to adjust a parameter for determination of a sorting condition on the basis of at least one of information regarding a target degree of purity or information regarding a target yield, of a target particle in acquired particles, in a sorting method for sorting a particle flowing through a passage. Furthermore, provided is a particle sorting device for sorting a particle flowing through a passage. The particle sorting device includes: a light detection unit configured to detect optical information obtained from a sample liquid; a sorting unit configured to sort a particle from the sample liquid on the basis of detected optical information; and a sorting control unit configured to adjust a parameter for determination of a sorting condition, on the basis of at least one of information regarding a target degree of purity or information regarding a target yield, of a target particle in acquired particles.

## Description

### TECHNICAL FIELD

The present technology relates to a device for controlling a processing condition when particles are sorted. More specifically, the present technology relates to a sorting control device for controlling a processing condition when particles are sorted from a sample liquid flowing in a passage, a particle sorting device and a particle sorting system using the sorting control device, a sorting control method, and a control program.

### BACKGROUND ART

Various devices have been developed so far for sorting a particle. For example, in a fine particle sorting system used in a flow cytometer, a laminar flow including a sample liquid containing cells and a sheath liquid is discharged from an orifice formed in a flow cell or a microchip. At the time of discharging, a predetermined vibration is applied to the laminar flow to form droplets. A moving direction of the formed droplets are electrically controlled depending on whether or not target fine particles are contained, and the target fine particles can be sorted.

As described above, a technique for sorting target particles in a microchip without forming droplets has also been developed.

For example, Patent Document 1 below describes "a microchip comprising: a sample liquid feed channel for permitting a sample liquid containing at least a particulate to flow through; at least one pair of sheath liquid feed channels configured to merge to the sample liquid feed channel from both sides thereof for permitting a sheath liquid to flow through surrounding the sample liquid; a merging channel connected to the sample liquid feed channel and the at least one pair of the sheath liquid feed channels, for permitting the sample liquid and the sheath liquid to merge and flow through the merging channel; a vacuum suction unit connected to the merging channel, for absorbing and drawing into the particulate subject to collection; and at least one pair of discharge channels formed on both sides of the vacuum suction unit for permitting to flow through from the merging channel" (claim 1). In the microchip, the target fine particles are collected by absorbing to the vacuum suction unit.

Furthermore, Patent Document 2 below describes "a microparticle sorting method including: a procedure of collecting a microparticle in a fluid that flows through a main channel in a branch channel that is in communication with the main channel by generating a negative pressure in the branch channel, wherein, in the procedure, a flow of a fluid is formed that flows toward a side of the main channel from a side of the branch channel at a communication opening between the main channel and the branch channel" (claim 1). In the sorting method, the flow of the fluid toward the main channel side suppresses non-target particles or a sample liquid containing the non-target particles and the sheath liquid from entering a sorting channel when a sorting operation is not being performed. Furthermore, Patent Document 2 below also describes a microchip for sorting microparticles capable of carrying out the microparticle sorting method (claim 9).

### CITATION LIST

### PATENT DOCUMENT

Patent Document 1: Japanese Patent Application Laid-Open No. 2012-127922
Patent Document 2: Japanese Patent Application Laid-Open No. 2014-36604

### SUMMARY OF THE INVENTION

### PROBLEMS TO BE SOLVED BY THE INVENTION

In a technique for sorting target particles in a microchip, for example, the target particles are suctioned into the particle sorting channel described above by negative pressure, but the suction is not performed in a case where the target particles are not contained in the sample liquid. Therefore, in order to improve particle sorting performance, it is necessary to control a timing at which the particles are sorted.

An object of the present technology is to provide a technique for controlling a timing for sorting, in order to improve sorting performance of particles in a technique for sorting target fine particles in a passage.

### SOLUTIONS TO PROBLEMS

First, the present technology provides a sorting control device having a sorting control unit configured to adjust a parameter for determination of a sorting condition
on the basis of at least one of information regarding a target degree of purity or information regarding a target yield, of a target particle in acquired particles,
in a sorting method for sorting a particle flowing through a passage. The sorting control unit can adjust a parameter for determination of a sorting condition further on the basis of gating information of the target particle in a sample liquid.

The sorting control unit can adjust a parameter for determination of a sorting condition further on the basis of at least one of a concentration of the target particle in the sample liquid or a number of particles flowing through.

In the sorting control device according to the present technology, the parameter may be one or more parameters selected from: a delay time range in which a recovery rate of acquired particles is equal to or higher than a first threshold value; and a time at which the recovery rate of the acquired particles is equal to or higher than a second threshold value.

In the sorting control device according to the present technology, the sorting condition may be one or more sorting conditions selected from: a liquid amount sent to the passage; a drive voltage applied to the pressure chamber; a drive waveform applied to the pressure chamber; and a sorting execution time.

The parameter for determination of the sorting condition can also be adjusted in a disturbance-generating environment.

Next, the present technology provides a particle sorting device for sorting a particle flowing through a passage, the particle sorting device including:
a light detection unit configured to detect optical information obtained from a sample liquid;
a sorting unit configured to sort a particle from the sample liquid on the basis of detected optical information; and
a sorting control unit configured to adjust a parameter for determination of a sorting condition, on the basis of at least one of information regarding a target degree of purity or information regarding a target yield, of a target particle in acquired particles.

Furthermore, the present technology provides a particle sorting system for sorting a particle flowing through a passage, the particle sorting system including:
a sorting device including
a light detection unit configured to detect optical information obtained from a sample liquid, and
a sorting unit configured to sort a particle from the sample liquid on the basis of detected optical information; and
a control device including a sorting control unit configured to adjust a parameter for determination of a sorting condition, on the basis of at least one of information regarding a target degree of purity or information regarding a target yield, of a target particle in acquired particles.

Moreover, the present technology provides a sorting control method for adjusting a parameter for determination of a sorting condition
on the basis of at least one of information regarding a target degree of purity or information regarding a target yield, of a target particle in acquired particles,
in a particle sorting method for sorting a particle flowing through a passage.

In addition, the present technology provides a control program that is a program used to control a sorting condition when a particle flowing through a passage is sorted,
the control program being for causing a computer to realize a sorting control function for adjusting a parameter for determination of a sorting condition
on the basis of at least one of information regarding a target degree of purity or information regarding the target recovery rate, of a target particle in acquired particles.

In the present technology, "particles" broadly include: bio-related fine particles such as cells, microorganisms, and liposomes; synthetic particles such as latex particles, gel particles, and industrial particles; and the like.

The bio-related fine particles include chromosomes, liposomes, mitochondria, organelles (cell organelles), and the like constituting various cells. The cells include animal cells (for example, hematopoietic cells and the like) and plant cells. The microorganisms include bacteria such as Escherichia coli, viruses such as tobacco mosaic virus, fungi such as yeast, and the like. Moreover, the bio-related fine particles may also include bio-related polymers such as nucleic acids, proteins, and composites of these. Furthermore, the industrial particles may be, for example, an organic or inorganic polymer material, a metal, or the like. The organic polymer material includes polystyrene, styrene/divinylbenzene, polymethyl methacrylate, or the like. The inorganic polymer material includes glass, silica, a magnetic material, or the like. The metal includes gold colloid, aluminum, or the like. In general, shapes of these particles are normally spherical, but may be non-spherical in the present technology, while its size, mass, and the like are also not particularly limited.

### BRIEF DESCRIPTION OF DRAWINGS

Fig. 1 is a schematic conceptual diagram schematically showing a first embodiment of a particle sorting device 2 capable of using a sorting control device 1 according to the present technology.
Fig. 2 is a schematic conceptual diagram schematically showing a first embodiment of a particle sorting system 3 capable of using the sorting control device 1 according to the present technology.
Fig. 3 is a schematic conceptual diagram schematically showing a second embodiment of a particle sorting system 3 capable of using a sorting control device 1 according to the present technology.
Fig. 4 is an enlarged conceptual view schematically showing an example of an embodiment of a microchip T in which a passage P that can be used in the present technology is formed.
Fig. 5 is a flowchart showing a rough flow of a sorting control method using the present technology.
Fig. 6 is a drawing-substitute graph showing a relationship between a delay time (Delay time) and a recovery rate (Recovery) of acquired particles.
Fig. 7 is a drawing-substitute graph showing a relationship between a ratio of target particles, a degree of purity (Purity) of the target particles in acquired particles, and a threshold value of a recovery rate (Recovery thresh) of the acquired particles.
Fig. 8 is a drawing-substitute graph showing a relationship between a guard time (Guard Time), a ratio of particles (Population ratio), and a yield of the target particle (Efficiency).
Fig. 9 is a drawing-substitute graph showing a waveform called a double pulse (Double pulse) as an example of a method of generating a disturbance.
Fig. 10 is a drawing-substitute graph for explaining an example of a guard time (Guard Time) measurement method.
Fig. 11 is a flowchart showing a specific example of a sorting control method using the present technology.
Fig. 12 is a flowchart showing an example different from Fig. 11 of the sorting control method using the present technology.

### MODE FOR CARRYING OUT THE INVENTION

A preferred embodiment for implementing the present technology will be described below with reference to the drawings. The embodiment described below shows one example of a representative embodiment of the present technology, and does not cause the scope of the present technology to be narrowly interpreted. Note that the description will be given in the following order.
1. Sorting control device 1, particle sorting device 2, particle sorting system 3
   (1) Passage P
   (2) Light irradiation unit 21
   (3) Light detection unit 22
   (4) Information processing unit 23
   (5) Sorting control device 1 (sorting control unit 11)
      (5-1) Sorting control unit 11
      (5-2) Storage unit 12
      (5-3) Display unit 13
      (5-4) User interface 14
   (6) Sorting unit 24
2. Sorting control method, particle sorting method
3. Computer program

### <1. Sorting control device 1, particle sorting device 2, particle sorting system 3>

A sorting control device 1 according to the present technology is a device that controls a sorting condition when particles in a sample liquid flowing through a passage P are sorted, and includes at least a sorting control unit 11. Furthermore, if necessary, a storage unit 12, a display unit 13, a user interface 14, and the like can be provided.

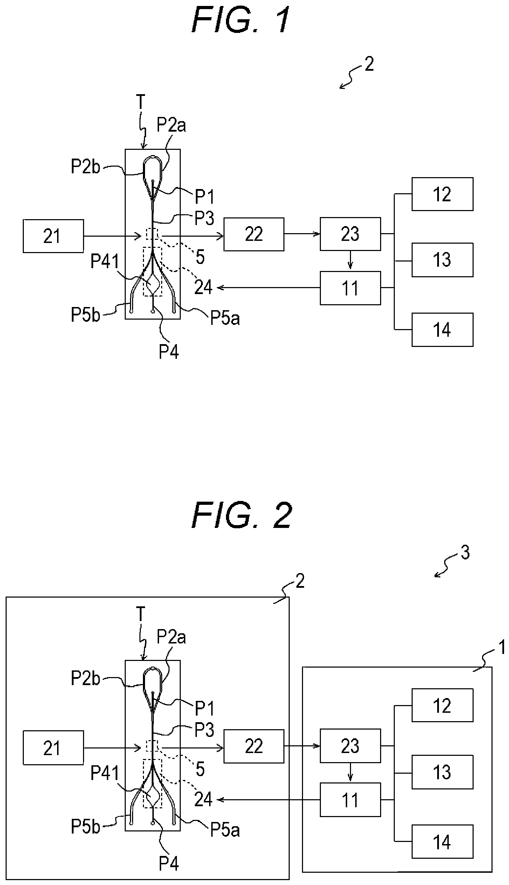

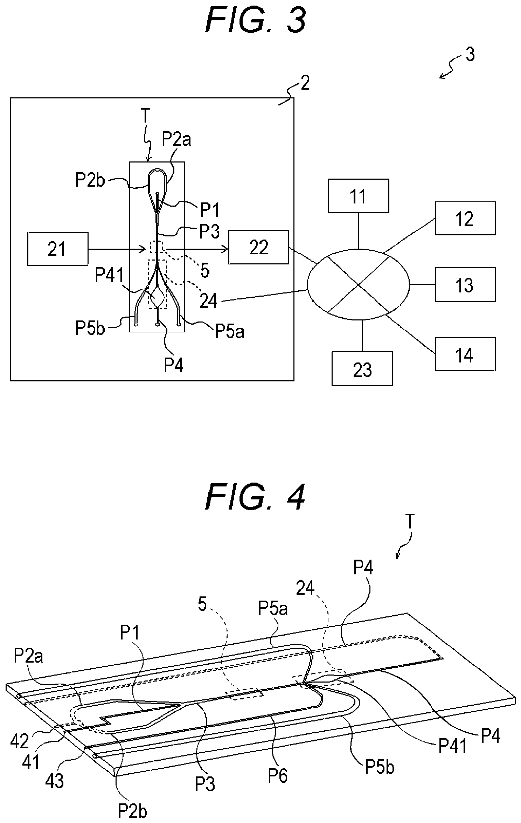

Fig. 1 is a schematic conceptual diagram schematically showing a first embodiment of a particle sorting device 2 capable of using the sorting control device 1 according to the present technology. Fig. 2 is a schematic conceptual diagram schematically showing a first embodiment of a particle sorting system 3 capable of using the sorting control device 1 according to the present technology. Fig. 3 is a schematic conceptual diagram schematically showing a second embodiment of a particle sorting system 3 capable of using a sorting control device 1 according to the present technology. The particle sorting device 2 and the particle measuring system 3 according to the present technology include at least a light detection unit 22, a sorting unit 24, and the sorting control unit 11. Furthermore, if necessary, the passage P, a light irradiation unit 21, an information processing unit 23, the storage unit 12, the display unit 13, the user interface 14, and the like can be provided.

Note that, the sorting control unit 11, the information processing unit 23, the storage unit 12, the display unit 13, the user interface 14, and the like may be provided in the particle sorting device 2 as shown in Fig. 1, or may be made as the particle sorting system 3 including: the particle sorting device 2; and the sorting control device 1 including the sorting control unit 11, the information processing unit 23, the storage unit 12, the display unit 13, and the user interface 14, as shown in Fig. 2. Furthermore, as shown in Fig. 3, the sorting control unit 11, the information processing unit 23, the storage unit 12, the display unit 13, and the user interface 14 that are individually independent may be made as the particle measuring system 3 connected to the light detection unit 22 and the sorting unit 24 of the particle sorting device 2 via a network.

Moreover, the sorting control unit 11, the information processing unit 23, the storage unit 12, and the display unit 13 can be provided in a cloud environment and connected to the particle sorting device 2 via a network. In this case, information processing records and the like in the sorting control unit 11 and the information processing unit 23 can be stored in the storage unit 12, and various kinds of information stored in the storage unit 12 can be shared among a plurality of users.

Hereinafter, details of each unit will be described along with a time series of measurement.

### (1) Passage P

The particle sorting device 2 and the particle sorting system 3 according to the present technology can analyze and sort particles by detecting optical information obtained from particles aligned in one line in a flow cell (passage P).

While the passage P may be provided in advance in the particle sorting device 2, analysis or sorting may also be performed by installing a commercially available passage P or a disposable chip or the like provided with the passage P, in the particle sorting device 2 and the particle sorting system 3.

Furthermore, a form of the passage P is also not particularly limited, and a passage width, a passage depth, and a passage cross-sectional shape of the passage P can also be freely designed as long as the form allows a laminar flow to be formed. For example, a micro passage having a passage width of 1 mm or less can also be used in the particle sorting device 2 and the particle sorting system 3. In particular, a micro passage having a passage width of 10 µm or more and 1 mm or less can be suitably used in the present technology.

Fig. 4 is an enlarged conceptual view schematically showing an example of an embodiment of a microchip T in which the passage P that can be used in the present technology is formed. A sample liquid containing particles is introduced from a sample inlet 41 into a sample passage P1. Furthermore, a sheath liquid introduced from a sheath inlet 42 is divided into two sheath passages P2a and P2b and sent. The sample passage P1 and the sheath passages P2a and P2b merge to form a main passage P3. A sample liquid laminar flow fed through the sample passage P1 and a sheath liquid laminar flow fed through sheath liquid passages P2a and P2b merge in the main passage P3, and forms a sheath flow in which the sample liquid laminar flow is sandwiched between the sheath liquid laminar flows.

Reference numeral 5 in Fig. 2 indicates a detection region in which excitation light is irradiated by the light irradiation unit 21 described later and fluorescence and scattered light are detected by the light detection unit 22 described later. Particles are sent to the detection region 5 in a state of being arranged in a row in the sheath flow formed in the main passage P3, and are irradiated with excitation light from the light irradiation unit 21.

The main passage P3 branches into three passages in the sorting unit 24 downstream of the detection region 5. The main passage P3 communicates with three branch passages of a sorting passage P4 and waste passages P5a and P5b, in the sorting unit 24 downstream of the detection region 5. Among these, the sorting passage P4 is a passage into which particles (also referred to as "target particles") determined to satisfy predetermined optical characteristics are taken. Whereas, particles (also referred to as "non-target particles") determined not to satisfy the predetermined optical characteristics flow into either of the two waste passages P5a and P5b without being taken into the sorting passage P4.

Furthermore, for example, in the embodiment shown in Fig. 4, sorting is made possible by providing three branch passages of the sorting passage P4 and the waste passages P5a and P5b downstream of the main passage P3 formed on the substrate T, and taking sorting target particles determined to satisfy the predetermined optical characteristics into the sorting passage P4, while allowing non-sorting-target particles determined not to satisfy the specified optical characteristics to flow into either of the two waste passages P5a and P5b without being taken into the sorting passage P4.

Taking of target particles into the sorting passage P4 can be performed by generating a negative pressure in the sorting passage P4 by a piezoelectric element such as a piezo element, although not shown, and suctioning the sheath liquid and the sample containing the target particles into the sorting passage P4 by using this negative pressure. The piezoelectric element is arranged in contact with a surface of the microchip T, and is arranged at a position corresponding to the sorting passage P4. More specifically, the piezoelectric element is arranged at a position corresponding to a pressure chamber P41 provided as a region where an inner space is expanded in the sorting passage P4.

As shown in Fig. 4, the inner space of the pressure chamber P41 is expanded in a plane direction (a width direction of the sorting passage P4) and also expanded in a cross-sectional direction (a height direction of the sorting passage P4). That is, the sorting passage P4 is extended in the width direction and the height direction in the pressure chamber P41. In other words, the sorting passage P4 is formed in the pressure chamber P41 so that a cross section perpendicular to a flow direction of the sample and the sheath liquid becomes large.

The piezoelectric element generates an elastic force with a change in an applied voltage, and causes a pressure change in the sorting passage P4 via a surface (contact surface) of the microchip T. When a flow is generated in the sorting passage P4 due to the pressure change in the sorting passage P4, a volume in the sorting passage P4 changes at the same time. The volume in the sorting passage P4 changes until reaching a volume defined by a displacement amount of the piezoelectric element corresponding to the applied voltage. More specifically, the piezoelectric element keeps the volume of the pressure chamber P41 small by pressing a displacement plate constituting the pressure chamber P41 in a state of being stretched by applying a voltage. Then, when the applied voltage drops, the piezoelectric element generates a force in a direction of contraction, and weakens the pressure on the displacement plate to generate a negative pressure in the pressure chamber P41.

In the present technology, in order to efficiently transmit an expansion and contraction force of the piezoelectric element into the pressure chamber P41, it is preferable that the surface of the microchip T is recessed at a position corresponding to the pressure chamber P41, and the piezoelectric element is arranged in the recess. As a result, the displacement plate serving as the contact surface of the piezoelectric element can be made thinner, and the displacement plate can be easily displaced by a change of the pressing force accompanying the expansion and contraction of the piezoelectric element, to cause the volume change of the pressure chamber P41.

As another sorting method, although not illustrated, it is also possible to take particles of the sorting target into the sorting passage P4 by controlling or changing a laminar flow direction by using a valve electromagnetic force, a fluid stream (gas or liquid), or the like.

The microchip T is formed by laminating a substrate layer on which the sample passage P1, the sorting passage P4, and the like are formed. The sample passage P1, the sorting passage P4, and the like can be formed on the substrate layer by injection molding of a thermoplastic resin using a mold. For thermoplastic resin, conventionally known plastics such as polycarbonate, polymethyl methacrylate resin (PMMA), cyclic polyolefin, polyethylene, polystyrene, polypropylene, or polydimethylsiloxane (PDMS) can be used as a material for the microchip. Note that the number of substrate layers constituting the microchip T is not particularly limited, and the microchip T may include, for example, two or more layers.

The microchip T used in the present technology may further include a gate liquid inlet 43 into which a gate liquid is introduced and a gate passage P6 in which the gate liquid introduced from the gate liquid inlet 43 flows. For example, the gate passage P6 is provided such that one or more are connected to or, for example, vertically intersect with the sorting passage P4 from the three branch passages of the sorting passage P4 and the waste passage P5a and P5b to before the pressure chamber P41. The "gate liquid" is a liquid that is made to flow through the gate passage P6 and serves as a main solvent for particles recovered after sorting, so that various kinds of liquid can be selected in accordance with the purpose. For example, in a case where a liquid medium used for the particle-containing liquid, the sheath liquid, or the particles are proteins, a liquid corresponding to the particles, such as a buffer liquid containing a surfactant and having an adjusted pH or the like, can be made to flow at a constant flow rate.

In particular, in a case where the particles are cells, a cell culture liquid, a cell preservation liquid, or the like can be used as the gate liquid. In a case of using a cell culture liquid, it is suitable for a case of performing a next step to be applied to recovered cells after sorting, such as, for example, cell culture, cell activation, and gene transfer. In a case of using a cell preservation liquid, it is suitable for a case of storing and transporting recovered cells. Furthermore, in a case where the cells to be sorted and recovered are undifferentiated cells such as iPS cells, a differentiation-induction liquid can be used, which makes it possible to efficiently proceed with the next work.

Note that, similarly, various kinds of liquid can be selected as the sheath liquid. In the present specification, a flow formed by the gate liquid is referred to as a "gate flow".

On an upstream side of the gate passage P6, the gate liquid can be introduced independently from the gate liquid inlet 43 and made to flow at an appropriate flow rate. In the present technology, a flow rate of the liquid introduced into the gate passage P6 is smaller than a flow rate of the liquid introduced into the sheath passages P2a and P2b. Therefore, it is economical in a case where an expensive liquid such as a cell culture liquid, a cell preservation liquid, or a differentiation-induction liquid is used only in the gate passage P6.

Furthermore, the gate flow can also be generated by branching from the sheath liquid flow. For example, the gate flow can be generated by connecting the sheath passages P2a and P2b after the sheath inlet 42 to an upstream end of the gate passage P6 so that the sheath liquid flow branches and flows also into the gate passage P6. In that case, it is necessary to appropriately design a passage resistance of the gate passage P6 so that the gate flow rate becomes an appropriate flow rate.

At an intersection of the gate passage P6 and the sorting passage P4, as well as the gate flow that is to go straight through the gate passage P6, the gate flow that goes toward the detection region 5 side and the pressure chamber P41 side is also generated. The latter gate flow can prevent particles that should not be recovered (non-target particles) from entering the pressure chamber P41 side of the sorting passage P4. The gate flow flowing through the gate passage P6 flows out to the sorting passage P4 and branches into the gate flow toward the detection region 5 side and the pressure chamber P41 side of the sorting passage P4. The former gate flow can prevent non-target particles from entering the pressure chamber P41 side of the sorting passage P4.

In the particle sorting device 2 and the particle sorting system 3 according to the present technology, although not illustrated, by individually causing communication and connection of a sample liquid storage unit with the sample passage P1, a sheath liquid storage unit with the sheath passages P2a and P2b, a sorting liquid storage unit with the sorting passage P4, and a waste liquid storage unit with the waste passages P5a and P5b, a sorting device of a completely closed type can be obtained. For example, in a case where the sorting target particles are cells or the like for use in a cell preparation or the like, in order to maintain a sterile environment and prevent contamination, it is preferable to design to isolate from an external environment to obtain the completely closed type.

### (2) Light irradiation unit 21

The particle sorting device 2 and the particle sorting system 3 according to the present technology may be provided with the light irradiation unit 21. The light irradiation unit 21 irradiates particles passing through the detection region 5 of the main passage P3 with light. In the particle sorting device 2 according to the present technology, the light irradiation unit 21 is not indispensable, and it is also possible to use an external light irradiation device or the like to irradiate the particles passing through the detection region 5 of the main passage P3 with light.

The light irradiation unit 21 may be provided with a plurality of light sources so that excitation light having different wavelengths can be irradiated.

Furthermore, a type of light emitted from the light irradiation unit 21 is not particularly limited, but light having a constant light direction, wavelength, and light intensity is desirable in order to reliably generate fluorescence or scattered light from particles. As an example, a laser, an LED, and the like can be mentioned. In a case of using a laser, a type thereof is not particularly limited, but it is possible to freely combine and use one kind or two or more kinds of an argon ion (Ar) laser, a helium-neon (He-Ne) laser, a dye laser, a krypton (Cr) laser, a semiconductor laser, a solid laser in which a semiconductor laser and a wavelength conversion optical element are combined, or the like.

### (3) Light detection unit 22

The light detection unit 22 detects fluorescence and scattered light emitted from a sorting target sample irradiated with excitation light. Specifically, the light detection unit 22 detects fluorescence and scattered light emitted from the sample and converts them into an electric signal. Then, the electric signal is outputted to the information processing unit 23 described later.

A configuration of the light detection unit 22 is not particularly limited, a known configuration can be adopted, and a method of converting to the electric signal is also not particularly limited.

### (4) Information processing unit 23

The particle sorting device 2 and the particle sorting system 3 according to the present technology may be provided with the information processing unit 23. The information processing unit 23 is inputted with an electric signal converted by the light detection unit 22. Specifically, the information processing unit 23 analyzes optical characteristics of the sample liquid and particles contained in the sample liquid, on the basis of the inputted electric signal.

In the particle sorting device 2 and the particle sorting system 3 according to the present technology, this information processing unit 23 may be provided independently of the sorting control device 1 described later, and it is also possible to provide the information processing unit 23 in the sorting control device 1 to analyze optical characteristics of particles contained in the sample liquid.

Note that, in the present technology, the information processing unit 23 is not indispensable, and it is also possible to use an external information processing device or the like to analyze optical characteristics of particles contained in the sample liquid.

Moreover, the information processing unit 23 includes a gating circuit to perform gating of the target particles in order to perform sorting control in the sorting control unit 11 (the sorting control device 1) described later.

Note that a configuration of the information processing unit 23 is not particularly limited, and a known configuration can be adopted. Moreover, a known method can be adopted as an information processing method performed by the gating circuit of the information processing unit 23.

### (5) Sorting control device 1 (sorting control unit 11)

In the present technology, a timing at which particles are sorted is controlled on the basis of optical characteristics of particles analyzed by the information processing unit 23. Hereinafter, a detailed sorting control method will be described.

### (5-1) Sorting control unit 11

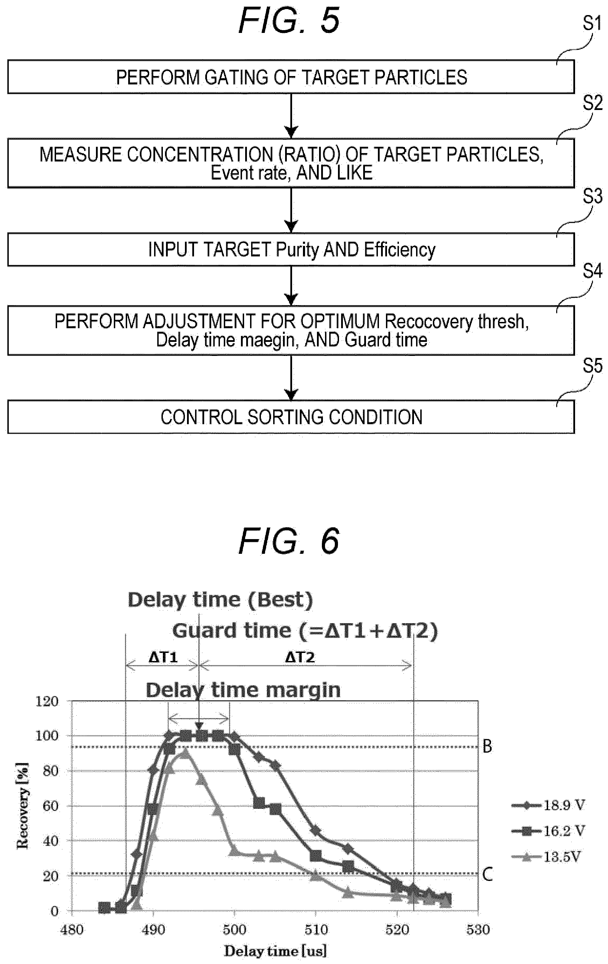

The sorting control unit 11 adjusts a parameter for determination of a sorting condition on the basis of at least one of information regarding a target degree of purity (Purity) or information regarding a target yield (Efficiency), of the target particles in the acquired particles. Fig. 5 is a flowchart showing a rough flow of the sorting control method using the present technology. Note that, in the present specification, the "acquired particles" refer to all the particles sorted into the sorting passage P4, and the "target particles" refer to particles to be a sorting target contained in particles sorted into the sorting passage P4.

In the present technology, first, the information processing unit 23 performs gating of the target particles (S1). Next, on the basis of gating information of the target particles, a concentration (ratio) of the target particles, a number of particles flowing through (Event rate), and the like are measured (S2).

Next, target values are determined for a degree of purity (Purity) of the target particles and a yield (Efficiency) of the target particles (S3) in the acquired particles. At this time, the degree of purity (Purity) of the target particles and the yield (Efficiency) of the target particles in the acquired particles are in a relationship in which adjustment of one causes another one to be within a certain range. Therefore, the user can set both target values by determining either one. Examples of a specific adjustment method include, for example, for either the degree of purity (Purity) of the target particles or the yield (Efficiency) of the target particles in the acquired particles, by the user, a method of directly inputting a target value, a method of adjusting by scrolling and the like of an adjustment bar and the like on a display screen, a method of adjusting by selecting a preset mode, and the like. Requirements for the degree of purity (Purity) of the target particles and the yield (Efficiency) of the target particles in the acquired particles differ depending on the user. In the present technology, the degree of purity (Purity) of the target particles and the yield (Efficiency) of the target particles in the acquired particles can be controlled according to the user's request.

Next, on the basis of the inputted target value of the degree of purity (Purity) of the target particles and the yield (Efficiency) of the target particles in the acquired particles, a threshold value of a recovery rate (Recovery thresh) of the acquired particles is adjusted, and further, a delay time range (Delay time margin) and a guard time (Guard Time) are adjusted (S4).

Here, regarding the delay time range (Delay time margin), the guard time (Guard Time), and a relationship between these and the degree of purity (Purity) of the target particles and the yield (Efficiency) of the target particles in the acquired particles, a description will be made with reference to Figs. 6 to 8.

Fig. 6 is a drawing-substitute graph showing a relationship between the delay time (Delay time) and the recovery rate (Recovery) of the acquired particles. As shown in Fig. 6, the delay time range (Delay time margin) is time at which the recovery rate of the acquired particles becomes equal to or greater than a first threshold value (Recovery thresh) indicated by reference numeral B in Fig. 6. Furthermore, the guard time (Guard Time) is time at which the recovery rate of the acquired particles becomes equal to or higher than a second threshold value (Recovery thresh) indicated by the symbol C in Fig. 6.

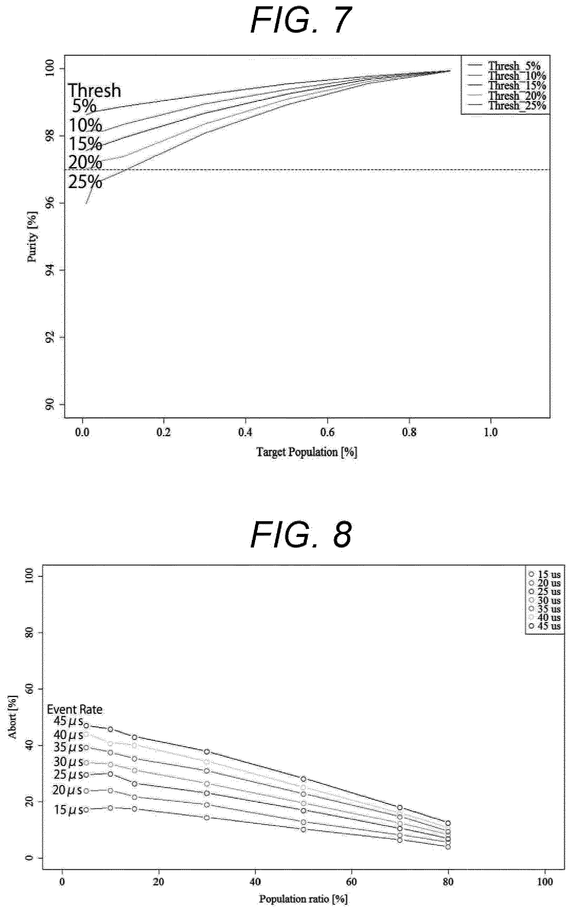

Fig. 7 is a drawing-substitute graph showing a relationship between a ratio of target particles (Target Population), and a degree of purity (Purity) of the target particles in the acquired particles and a threshold value of the recovery rate (Recovery thresh) of the acquired particles. Furthermore, Fig. 8 is a drawing-substitute graph showing a relationship between a guard time (Guard Time), a ratio of particles (Population ratio), and a yield of the target particle (Efficiency) (1-Abort). As shown in Figs. 7 and 8, from these relationships, a threshold value of the recovery rate (Recovery thresh) of the acquired particles is adjusted on the basis of the concentration (ratio) of the target particles, the number of particles flowing through (Event rate), the degree of purity (Purity) of the target particles and the yield (Efficiency) of the target particles in the acquired particles, and further, the delay time range (Delay time margin) and the guard time (Guard Time) can be adjusted.

It is also possible to measure the recovery rate (Recovery) of the acquired particles in a disturbance-generating environment. By measuring the recovery rate (Recovery) of acquired particles in a disturbance-generating environment, which is a stricter condition, and adjusting the parameter (the delay time range (Delay time margin) and the guard time (Guard Time)) for determination of a sorting condition, the sorting condition can be controlled more accurately.

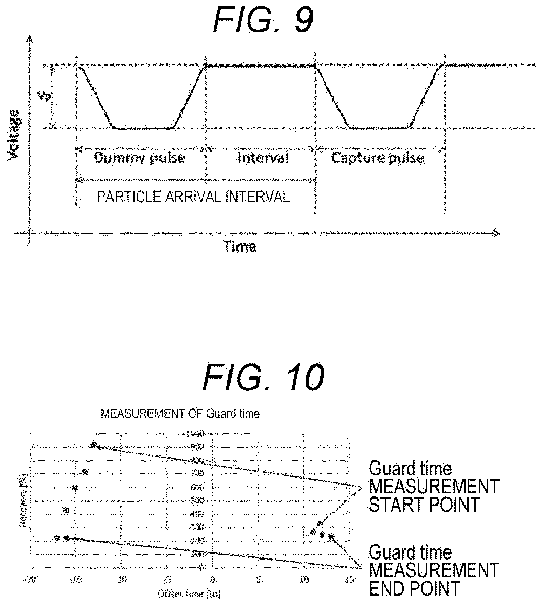

In the disturbance-generating environment, for example, by applying a waveform called a double pulse (Double pulse) as shown in Fig. 9 to the pressure chamber P41, a disturbance can be generated in the passage P.

Furthermore, while the recovery rate (Recovery) of the acquired particles is measured by detecting and counting forward scattered signals when the particles pass downstream of the pressure chamber P41, at this time, the signals may overlap to cause incorrect counting if particles pass through highly frequently. Therefore, it is possible to solve this problem by using a logic that sorting processing is not performed in a case where the particles arrive close to each other within a certain interval.

In the adjustment of the guard time (Guard Time), the guard time (Guard Time) can also be adjusted by calculating using a regression equation such as Guard time = α * (Delay time margin) k, and adjusting a threshold value of the delay time range (Delay time margin) to a certain range.

Furthermore, in the measurement of guard time (Guard Time), by determining a measurement start point by using a predicted value obtained by using the regression equation, as shown in Fig. 10, it is possible to acquire the guard time (Guard Time) with minimum measurement without acquiring all the recovery slopes.

As described above, after adjustment of the parameter (the delay time range (Delay time margin) and the guard time (Guard Time)) for determination of the sorting condition, the sorting conditions are controlled, such as a liquid amount of the sheath flow sent to the passage P, a drive voltage applied to the pressure chamber P41 for sorting, a drive waveform applied to the pressure chamber P41 for sorting, and a sorting execution time, on the basis of the adjusted delay time range (Delay time margin) and guard time (Guard Time) (S5).

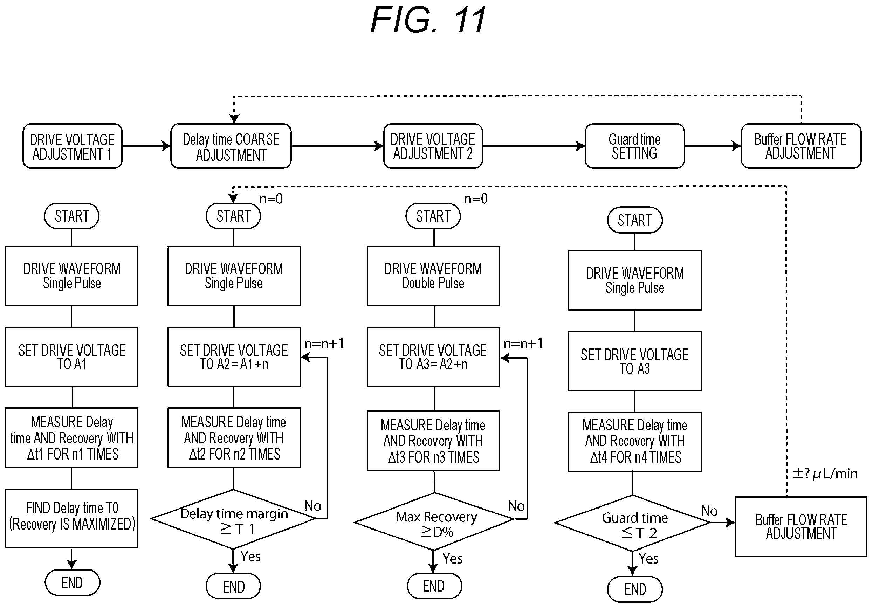

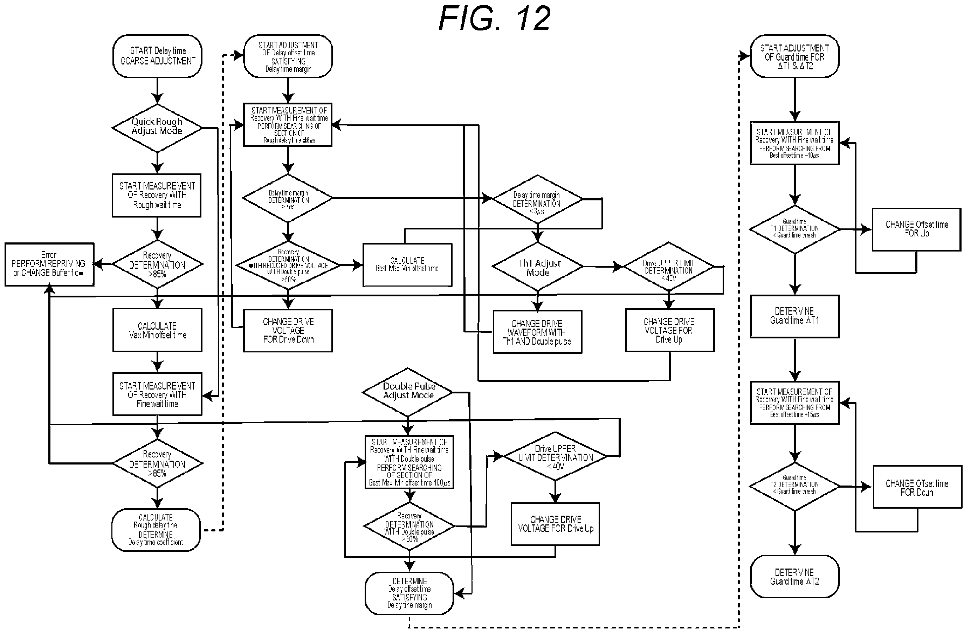

Fig. 11 is a flowchart showing a specific example of the sorting control method using the present technology, and Fig. 12 is a flowchart showing an example different from Fig. 11 of the sorting control method using the present technology. Hereinafter, a specific example of the sorting control method using the present technology will be described with reference to Fig. 11.

### (a) Coarse adjustment of delay time (Delay time)

First, a drive voltage applied to the pressure chamber P41 is set to A1 in a drive waveform of a single pulse (SinglePulse). In this state, by shifting the delay time (Delay time) by time t1 (for example, two microseconds) and measuring the recovery rate (Recovery) for n1 times (for example, 15 times), the delay time (Delay time) (T0) that maximizes the recovery rate (Recovery) is found.

### (b) Drive voltage control 1

Next, a drive voltage applied to the pressure chamber P41 is set to A2 = A1 + n in a drive waveform of a single pulse (SinglePulse).

In this state, by shifting the delay time (Delay time) by time t2 (for example, one microsecond) and measuring the recovery rate (Recovery) for n2 times (for example, ten times), A2 is controlled so that the delay time range (Delay time margin) is T1 (for example, four microseconds) or more.

### (c) Drive voltage control 2

Next, a drive voltage applied to the pressure chamber P41 is set to A3 = A2 + n in a drive waveform of a double pulse (Double pulse). In this state, by shifting the delay time (Delay time) by time t3 (for example, one microsecond) and measuring the recovery rate (Recovery) for n3 times (for example, six times), A3 is controlled so that the maximum recovery is D% (for example, 95%) or higher.

### (d) Adjustment of guard time (Guard Time)

Next, a drive voltage applied to the pressure chamber P41 is set to A3 in a drive waveform of a single pulse (SinglePulse). In this state, by shifting the delay time (Delay time) by time t4 (for example, two microseconds) and measuring the recovery rate (Recovery) for n4 times (for example, 20 times), a buffer flow rate is adjusted so that the guard time (Guard Time) is T2 (for example, 25 microseconds) or less. At this time, in a case where the buffer flow rate is changed, the process returns to (b) described above and the drive voltage is controlled again.

Note that the order of these can be changed as appropriate, and the buffer flow rate can also be adjusted first.

As described above, by adjusting the parameter such as the delay time range (Delay time margin) and the guard time (Guard Time) for determination of the sorting condition, it is possible to maintain equal sorting accuracy even in a case where the characteristics vary among the microchips.

### (5-2) Storage unit 12

The sorting control device 1, the particle sorting device 2, and the particle sorting system 3 according to the present technology may be provided with the storage unit 12 for storage of various data. The storage unit 12 can store all matters related to particle sorting, such as, for example, optical information of particles detected by the light detection unit 22, records of analysis results in the information processing unit 23, and records of control information in the sorting control unit 11.

Furthermore, as described above, in the present technology, since the storage unit 12 can be provided in a cloud environment, it is also possible for each user to share various kinds of information recorded in the storage unit 12 on the cloud via a network.

Note that, in the present technology, the storage unit 12 is not indispensable, and various data can be stored by using an external storage device or the like.

### (5-3) Display unit 13

The sorting control device 1, the particle sorting device 2, and the particle sorting system 3 according to the present technology may be provided with the display unit 13 that displays various kinds of information. The display unit 13 can display all matters related to particle sorting such as, for example, optical information of particles detected by the light detection unit 22, analysis results in the information processing unit 23, and control information in the sorting control unit 11.

In the present technology, the display unit 13 is not indispensable, and an external display device may be connected. As the display unit 13, for example, a display, a printer, or the like can be used.

### (5-4) User interface 14

The sorting control device 1, the particle sorting device 2, and the particle sorting system 3 according to the present technology may further be provided with the user interface 14 that is a part for the user to operate. The user can access each unit and control each unit through the user interface 14.

In the present technology, the user interface 14 is not indispensable, and an external operation device may be connected. As the user interface 14, for example, a mouse, a keyboard, or the like can be used.

### (6) Sorting unit 24

The particle sorting device 2 and the particle sorting system 3 according to the present technology are provided with the sorting unit 24. In the sorting unit 24, particles are sorted on the basis of optical characteristics of the particles analyzed by the information processing unit 23. For example, in the sorting unit 24, particles can be sorted in the passage P of the three branch passages of the sorting passage P4 and the waste passages P5a and P5b downstream of the detection region 5, on the basis of analysis results of a size, a form, an internal structure, and the like of the particle analyzed from optical information. Note that, since the details of the sorting method in the sorting unit 24 have been described in the description part of the passage P, the description thereof is omitted here.

### <2. Sorting control method, particle sorting method>

A sorting control method according to the present technology is a method of controlling a sorting condition when particles in a sample liquid flowing through the passage P are sorted, and at least a sorting control step is performed. Furthermore, a storage step, a display step, and the like can be performed, if necessary. In a particle sorting method according to the present technology, at least a light detection step, a sorting control step, and a sorting step are performed. Furthermore, a light irradiation step, a storage step, a display step, and the like can be performed, if necessary. Note that, since details of each step are the same as the steps performed by each unit of the sorting control device 1, the particle sorting device 2, and the particle sorting system 3 according to the present technology, the description thereof is omitted here.

### <3. Computer program>

A computer program according to the present technology is a program used for control of a sorting condition when particles in a sample liquid flowing through a passage P is sorted, and is a program for causing a computer to realize a sorting control function for adjusting a parameter for determination of a sorting condition on the basis of at least one of information regarding a target degree of purity of target particles in acquired particles or information regarding a recovery rate of the acquired particles.

The computer program according to the present technology is recorded on an appropriate recording medium. Furthermore, the computer program according to the present technology can be stored in a cloud environment or the like, and can be downloaded to a personal computer or the like through a network and used, by a user. Note that, since the sorting control function in the computer program according to the present technology is the same as the function of the sorting control unit 11 in the sorting control device 1 according to the present technology, the description thereof is omitted here.

Note that, in the present technology, the following configuration can also be adopted.
(1) A sorting control device including a sorting control unit configured to adjust a parameter for determination of a sorting condition
   on the basis of at least one of information regarding a target degree of purity or information regarding a target yield, of a target particle in acquired particles,
   in a sorting method for sorting a particle flowing through a passage.
(2) The sorting control device according to (1), in which the sorting control unit adjusts a parameter for determination of a sorting condition further on the basis of gating information of a target particle in a sample liquid.
(3) The sorting control device according to (1) or (2), in which the sorting control unit adjust a parameter for determination of a sorting condition further on the basis of at least one of a concentration of a target particle in a sample liquid or a number of particles flowing through.
(4) The sorting control method according to any one of (1) to (3), in which the parameter is one or more parameters selected from: a delay time range in which a recovery rate of acquired particles is equal to or higher than a first threshold value; and a time at which the recovery rate of the acquired particles is equal to or higher than a second threshold value.
(5) The sorting control method according to any one of (1) to (4), in which the sorting condition is one or more sorting conditions selected from: a liquid amount sent to the passage; a drive voltage applied to the pressure chamber; a drive waveform applied to the pressure chamber; and a sorting execution time.
(6) The sorting control method according to any one of (1) to (5), in which adjustment of the parameter for determination of the sorting condition is performed in a disturbance-generating environment.
(7) A particle sorting device for sorting a particle flowing through a passage, the particle sorting device including:
   a light detection unit configured to detect optical information obtained from a sample liquid;
   a sorting unit configured to sort a particle from the sample liquid on the basis of detected optical information; and
   a sorting control unit configured to adjust a parameter for determination of a sorting condition, on the basis of at least one of information regarding a target degree of purity or information regarding a target yield, of a target particle in acquired particles.
(8) A particle sorting system for sorting a particle flowing through a passage, the particle sorting system including:
   a sorting device including
   a light detection unit configured to detect optical information obtained from a sample liquid, and
   a sorting unit configured to sort a particle from the sample liquid on the basis of detected optical information; and
   a control device including a sorting control unit configured to adjust a parameter for determination of a sorting condition, on the basis of at least one of information regarding a target degree of purity or information regarding a target yield, of a target particle in acquired particles.
(9) A sorting control method for performing a sorting control step to adjust a parameter for determination of a sorting condition
   on the basis of at least one of information regarding a target degree of purity or information regarding a target yield, of a target particle in acquired particles,
   in a particle sorting method for sorting a particle flowing through a passage.
(10) A control program that is a program used for control of a sorting condition when a particle flowing through a passage is sorted,
   the control program being for causing a computer to realize a sorting control function for adjusting a parameter for determination of a sorting condition
   on the basis of at least one of information regarding a target degree of purity or information regarding a target yield, of a target particle in acquired particles.

### REFERENCE SIGNS LIST

- 1: Sorting control device
- 2: Particle sorting device
- 3: Particle sorting system
- P: Passage
- 21: Light irradiation unit
- 22: Light detection unit
- 23: Information processing unit
- 1: Sorting control device
- 11: Sorting control unit
- 12: Storage unit
- 13: Display unit
- 14: User interface
- 24: Sorting unit
- T: Microchip

## Claims

1. A sorting control device comprising a sorting control unit configured to adjust a parameter for determination of a sorting condition
on a basis of at least one of information regarding a target degree of purity or information regarding a target yield, of a target particle in acquired particles,
in a sorting method for sorting a particle flowing through a passage.

2. The sorting control device according to claim 1, wherein the sorting control unit adjusts a parameter for determination of a sorting condition further on a basis of gating information of a target particle in a sample liquid.

3. The sorting control device according to claim 1, wherein the sorting control unit adjust a parameter for determination of a sorting condition further on a basis of at least one of a concentration of a target particle in a sample liquid or a number of target particles flowing through.

4. The sorting control method according to claim 1, wherein the parameter includes one or more parameters selected from: a delay time range in which a recovery rate of acquired particles is equal to or higher than a first threshold value; and a guard time at which the recovery rate of the acquired particles is equal to or higher than a second threshold value.

5. The sorting control method according to claim 1, wherein the sorting condition includes one or more sorting conditions selected from: a liquid amount sent to the passage; a drive voltage for sorting; a drive waveform for sorting; and a sorting execution time.

6. The sorting control method according to claim 1, wherein adjustment of the parameter for determination of the sorting condition is performed in a disturbance-generating environment.

7. A particle sorting device for sorting a particle flowing through a passage, the particle sorting device comprising:
a light detection unit configured to detect optical information obtained from a sample liquid;
a sorting unit configured to sort a particle from the sample liquid on a basis of detected optical information; and
a sorting control unit configured to adjust a parameter for determination of a sorting condition, on a basis of at least one of information regarding a target degree of purity or information regarding a target yield, of a target particle in acquired particles.

8. A particle sorting system for sorting a particle flowing through a passage, the particle sorting system comprising:
a sorting device including
a light detection unit configured to detect optical information obtained from a sample liquid, and
a sorting unit configured to sort a particle from the sample liquid on a basis of detected optical information; and
a control device including a sorting control unit configured to adjust a parameter for determination of a sorting condition, on a basis of at least one of information regarding a target degree of purity or information regarding a target yield, of a target particle in acquired particles.

9. A sorting control method for performing a sorting control step to adjust a parameter for determination of a sorting condition
on a basis of at least one of information regarding a target degree of purity or information regarding a target yield, of a target particle in acquired particles,
in a particle sorting method for sorting a particle flowing through a passage.

10. A control program that is a program used for control of a sorting condition when a particle flowing through a passage is sorted
the control program being for causing a computer to realize a sorting control function for adjusting a parameter for determination of a sorting condition
on a basis of at least one of information regarding a target degree of purity or information regarding a target yield, of a target particle in acquired particles.
